# EUROPÄISCHE PATENTSCHRIFT

(11) **EP 1 691 283 B1**
(45) Veröffentlichungstag und Bekanntmachung des Hinweises auf die Patenterteilung: **11.05.2011**
(21) Anmeldenummer: 05002657.4
(22) Anmeldetag: 09.02.2005
(51) Int. Cl.: G06F 9/46, G06F 3/12

(54) **Verfahren zum Steuern eines Zugriffs auf wenigstens ein Peripheriegerät**
Method for controlling of an access to at least one peripheral device
Procédé pour le contrôle d'accès à au moins un appareil périphérique

(43) Veröffentlichungstag der Anmeldung: 16.08.2006
(73) Patentinhaber: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(56) Entgegenhaltungen:
- EP-A- 0 588 513
- US-A- 5 813 348
- US-A1- 2004 227 973
- US-B1- 6 476 927

## Beschreibung

Die Erfindung betrifft ein Verfahren zum Steuern eines Zugriffs auf wenigstens ein Peripheriegerät.

Große Dienstleistungsunternehmen, wie beispielsweise die Anmelderin, bieten ihren Kunden oftmals ein breites Spektrum von Dienstleistungen aus verschiedenen Dienstleistungsbereichen an, wie beispielsweise dem Finanz- und dem Logistiksektor. In der Regel verfügen diese Unternehmen dabei insbesondere über eine Vielzahl von Filialen, um den Kunden diese Dienstleistungen zugänglich zu machen.

Mit den Dienstleistungen ist eine Vielzahl von Geschäftsvorgängen verbunden, die in den Filialen durch Datenverarbeitungsanlagen unterstützt durchgeführt werden. Für jeden Geschäftsvorgang bzw. jeden Teilvorgang eines Geschäftsvorgangs ist dabei üblicherweise ein Softwareprogramm oder ein Softwareprogrammmodul, das in ein Gesamtprogramm integriert ist, zur Bearbeitung vorgesehen.

Zur Erfassung und zur Ausgabe von Daten sind die Datenverarbeitungsanlagen mit Peripheriegeräten, wie beispielsweise Druckern, Barcodescannern oder Magnet- und Chipkartenlesen verbunden, auf welche die Programme bzw. Programmmodule bei der Vorgangsbearbeitung zugreifen. Dabei ist es üblicherweise erforderlich, die Programme für den Zugriff auf ein bestimmtes Peripheriegerät eines vorgegebenen Modells in spezieller Weise einzurichten.

Die Geschäftsvorgänge, die in einem Unternehmen der genannten Art durchgeführt werden, unterliegen jedoch ständigen Anpassungen, bei denen bestehende Vorgänge verändert und neue Vorgänge geschaffen werden. Diese Anpassungen ziehen entsprechende Anpassungen der Softwareprogramme zur Bearbeitung der Vorgänge nach sich.

Um eine effiziente Anpassung der Softwareprogramme zu ermöglichen, sollten diese die Softwareprogramme zentral erstellt und in einfacher Weise in den Datenverarbeitungsanlagen der Filialen implementiert werden können. In der Regel sind jedoch bestimmte Peripheriegeräte nicht in jeder Filiale vorhanden und in verschiedenen Filialen können unterschiedliche Modelle eines Peripheriegerätes betrieben werden.

Umgekehrt werden auch regelmäßig Anpassungen der Peripheriegeräte in den Filialen vorgenommen. Diese sollten ebenfalls mit möglichst geringem Aufwand durchgeführt werden können und dabei insbesondere möglichst geringfügige Anpassungen der Softwareprogramme erforderlich machen.

Um die Softwareprogramme nicht an die konkret vorhandenen Peripheriegeräte anpassen zu müssen, kann dabei eine so genannte Hardware-Abstraktionsschicht eingerichtet werden, über welche die Peripheriegeräte unabhängig von dem konkreten Gerätemodell angesprochen werden können.

Hierzu ist es beispielsweise aus der europäischen Patentanmeldung EP 1 369 783 A2 bekannt, ein Schnittstellensystem einzurichten, bei dem Anwendungsprogramme anhand einer Angabe der Funktion einer Hardwarekomponente auf diese zugreifen können. Das bekannte System verfügt dafür über Funktionsprofileinheiten, durch die eine bestimmte, hardwaregestützt durch ein Anwendungsprogramm ausgeführte Funktion einer Hardwareprofileinheit zugeordnet wird, welche eine Adressinformation für eine zur Ausführung der Funktion benötigte Hardwarekomponente enthält.

In der Regel können jedoch bestimmte Funktionen durch verschiedene in einer Filiale eines Dienstleistungsunternehmens vorhandene Peripheriegeräte durchgeführt werden.

Das US-Patent US 6 476 927 B1 betrifft ein Drucksystem, bei dem ein Drucker anhand eines Druckerprofils von einem Druckerserver ausgewählt wird. Dabei ist es vorgesehen, dass zunächst das Druckprofil von einem Druckertreiber an einen Druckerserver gesendet wird. In dem Druckerserver werden dann aus einem Druckerpool Drucker ermittelt, welche dem Profil entsprechen und anschließend die Verfügbarkeit dieser Drucker überprüft. Aus den verfügbaren Druckern wird dann anhand eines bestimmten Kriteriums ein Drucker ausgewählt und dessen Netzwerkadresse innerhalb eines "print tokens" an den Druckertreiber übermittelt, welcher den Druckauf-trag daraufhin an den Drucker senden kann.

Die US-Patentanmeldung US 2004/0227973 A1 offenbart ein System zum Konfigurieren von Client-Computern in einem Netzwerk, wobei ein Konfigurationsprofil in einem zentralen Speicher abgelegt und durch ein auf den Client-Computern ausgeführtes Konfigurationsprogramm abgerufen und eingelesen wird, um die Druckerkonfiguration auf den Client-Computern durchzuführen.

Aus dem US-Patent Nr. 5 813 348 geht ein System zum Verteilen von Druckaufträgen hervor, bei dem Druckereien und Kunden von Druckereien sowie ein zentraler Job-Prozessor in einem Netzwerk miteinander verbunden sind. Die Kunden senden dabei Druckaufträge an den Job-Prozessor, welcher an-hand verschiedener Kriterien eine geeignete Druckmaschine zur Durchführung des Druckauf-trages auswählt und den Druckauftrag an ein Steuergerät der Druckmaschine übermittelt, oder welcher Angaben über die ausgewählte Druckmaschine an den Kunden sendet, der den Druckauftrag dann an das Steuergerät der ausgewählten Druckmaschine senden kann.

Es ist wünschenswert, dass der Zugriff auf Peripheriegeräte so gesteuert wird, dass eine möglichst flexible Auswahl eines Peripheriegerätes aufgrund vorgegebener Kriterien erfolgt.

Erfindungsgemäß wird daher ein Verfahren zum Steuern des Zugriffs auf wenigstens ein Peripheriegerät nach dem Patentanspruch 1 bereitgestellt.

Zweckmäßige Weiterbildungen des Verfahrens sind Gegenstand der abhängigen Ansprüche.

Die Erfindung sieht dabei vor, ein Verfahren zum Steuern eines Zugriffs auf wenigstens ein Peripheriegerät mit den folgenden Schritten durchzuführen:
- Übermitteln eines Anforderungsprofils von einem Client an einen Gerätehost,
- Ermitteln von mit dem Anforderungsprofil übereinstimmenden Geräteprofilen durch einen Vergleich des Anforderungsprofils mit mehreren Geräteprofilen, wobei jedes Geräteprofil einem Peripheriegeräte eindeutig zugeordnet ist,
- Ermitteln einer Keinenrolge der mit dem Anforaerungsprofil übereinstimmenden Geräteprofile anhand einer Sortierung der mit dem Anforderungsprofil übereinstimmenden Geräteprofile nach wenigstens einem vorgebbaren Kriterium,
- Überprüfen der Verfügbarkeit der den mit dem Anforderungsprofil übereinstimmenden Geräteprofilen zugeordneten Peripheriegeräte in der ermittelten Reihenfolge der Geräteprofile,
- Registrieren des Clients für einen Zugriff auf das erste Peripheriegerät, für das die Verfügbarkeit bei der Überprüfung festgestellt wird.

Bei den Clients handelt es sich vorzugsweise um Software- oder Hardwarekomponenten, die über eine Datenverbindung mit dem Gerätehost verbunden sind, der die Steuerung der Peripheriegeräte vornimmt.

Bei dem Verfahren erfolgt der Zugriff auf Peripheriegeräte anhand eines Anforderungsprofils, das von einem Client an den Gerätehost übermittelt wird, wobei unter einem Anforderungsprofil ein Profil verstanden wird, das wenigstens eine sich auf die Funktion eines Peripheriegerätes beziehende Angabe enthält.

Dies ermöglicht es, ein Peripheriegerät ohne Angabe einer konkreten Identifizierung anzusprechen. Die Ermittlung für den Zugriff geeigneter Peripheriegeräte erfolgt anhand eines Vergleichs des Anforderungsprofils mit Geräteprofilen und einer anschließenden Sortierung der Geräteprofile nach einem vorgebbaren Kriterium, so dass eine Rangfolge geeigneter Periphergeräte ermittelt werden kann.

Die Registrierung eines Zugriffs wird nach einer in der anhand der Sortierung ermittelten Reihenfolge durchgeführten Überprüfung der verfügbarkeit der geeigneten peripheriegeräte vorgenommen, so dass stets das im Sinne des vorgebbaren Kriteriums für den Zugriff am besten geeignete verfügbare Peripheriegerät ausgewählt wird.

In einer besonders bevorzugten Ausführungsform der Erfindung ist es dabei vorgesehen, dass die Verfügbarkeit eines Peripheriegerätes nicht festgestellt wird, wenn ein Client für einen Zugriff auf dieses Peripheriegerät registriert ist.

Damit wird erreicht, dass die Clients einen exklusiven Zugriff auf ein Peripheriegerät haben. Dies verhindert wirkungsvoll eine Fehlleitung von Daten von einem Client an ein Peripheriegerät und vor allem eine Fehlleitung von mittels eines Peripheriegerätes erfasster Daten an einen Client.

Das Anforderungsprofil enthält wenigstens eine Angabe eines Gerätetyps und/oder eine Angabe einer Eigenschaft eines Peripheriegerätes.

Die Funktion des Peripheriegerätes kann in dieser Ausführungsform der Erfindung damit anhand des Gerätetyps und/oder der Eigenschaft des Peripheriegerätes angegeben werden.

Die Geräteprofile enthalten eine Liste mit Gerätetypen und/oder eine Liste mit Eigenschaften des Peripheriegerätes.

Durch die Angabe mehrerer Gerätetypen und/oder Eigenschaften eines Peripheriegerätes in einer in dem Geräteprofil enthaltenen Liste wird dabei der Tatsache Rechnung getragen, dass ein Peripheriegerät mehrere Funktionen ausführen kann.

Dabei ist es vorgesehen, dass die Sortierung der Geräteprofile anhand der Listenplätze der in dem Anforderungsprofil enthaltenen Angabe des Gerätetyps innerhalb der in den ermittelten Geräteprofilen enthaltenen Listen und/oder anhand der Listenplätze der in dem Anforderungsprofil enthaltenen Angabe der Eigenschaft des Peripheriegerätes innerhalb der in den ermittelten Geräteprofilen enthaltenen Listen erfolgt.

Mit den Listenplätzen wird dabei ein Kriterium zur Sortierung der Geräteprofile vorgegeben, das flexibel an die Erfordernisse des jeweiligen Einsatzgebietes der Erfindung angepasst werden kann. Insbesondere kann der Listenplatz dabei die Eignung eines Peripheriegerätes zur Durchführung einer bestimmten Funktion im Hinblick auf das Einsatzgebiet angeben.

In einer bevorzugten Ausführungsform der Erfindung sind die Geräteprofile in einer Konfigurationsdatei enthalten, welche jeweils ein Geräteprofil für jedes möglicherweise mit dem Gerätehost verbundene Peripheriegerät enthält.

Die Konfigurationsdatei kann dabei in einer zentralen Stelle eines Unternehmens erstellt werden und Geräteprofile für alle innerhalb des Unternehmens betriebenen Peripheriegeräte enthalten. Durch eine zentrale Erstellung der Konfigurationsdatei wird dabei eine redundante Erstellung von Geräteprofilen vermieden.

In einer weiteren bevorzugten Ausführungsform der Erfindung sind die Geräteprofile in einer Geräteliste enthalten, welche jeweils ein Geräteprofil für jedes mit dem Gerätehost verbundene Peripheriegerät umfasst.

Diese Ausführungsform hat den Vorteil, dass die Geräteliste nur solche Peripheriegeräte enthält, die tatsächlich mit dem Gerätehost verbunden sind.

In einer besonders vorteilhaften Ausführungsform der Erfindung ist es vorgesehen, dass für die Geräteprofile in der Gerätekonfigurationsdatei überprüft wird, ob die den Geräteprofilen zugeordneten Peripheriegeräte mit dem Gerätehost verbunden sind, und die Geräteprofile, bei denen die Überprüfung ergibt, dass das zugeordnete Peripheriegerät mit dem Gerätehost verbunden ist, in der Geräteliste gespeichert werden.

In dieser Ausführungsform kann eine zentrale Erstellung der Geräteprofile erfolgen, ohne dass nicht mit dem Gerätehost verbundene Peripheriegeräte bei der Ermittlung für einen Zugriff geeigneter Peripheriegeräte berücksichtigt werden.

Vorzugsweise wird die Überprüfung dabei in regelmäßigen Zeitabständen durchgeführt, so dass eine fortlaufend aktualisierte Geräteliste vorliegt.

In einer vorteilhaften Durchführungsform des Verfahrens ist es ferner vorgesehen, dass der Client ein Negativprofil an den Gerätehost übermittelt, und bei der Ermittlung von mit dem Anforderungsprofil übereinstimmenden Geräteprofilen solche Geräteprofile nicht berücksichtigt werden, die mit dem Negativprofil übereinstimmen.

Hierdurch können die Peripheriegeräte für den Zugriff durch den Client besonders präzise spezifiziert bestimmt werden.

In einer weiteren vorteilhaften Durchführungsform des Verfahrens ist es vorgesehen, dass die mit dem Anforderungsprofil übereinstimmenden Geräteprofile, für die das zugeordnete Peripheriegerät verfügbar ist, an den Client übermittelt werden, dass der Client eine in einem der Geräteprofile enthaltene eindeutige Kennung eines Peripheriegerätes an den Gerätehost übermittelt und dass für den Client ein Zugriff für das Peripheriegerät, dem die eindeutige Kennung zugeordnet ist, registriert wird.

Hierdurch kann ein Client für einen Zugriff auf ein konkretes, von ihm spezifiziertes Peripheriegerät registriert werden.

Darüber hinaus stellt die Erfindung vorteilhaft ein computerlesbares Medium bereit, das Anweisungen zur Durchführung des Verfahrens in einer der dargestellten Durchführungsformen nach enthält.

Eine Einrichtung, die in diesem Zusammenhang verwendet werden kann, stellt zum Beispiel eine Vorrichtung zum Steuern eines Zugriffs auf wenigstens ein Peripheriegerät bereit, die einen mit dem Peripheriegerät verbundenen Gerätehost und wenigstens einen mit dem Gerätehost verbundenen Client umfasst, wobei der Client Anforderungsprofile an den Gerätehost übermittelt und wobei der Gerätehost folgende Merkmale enthält:
- Ein Speichermittel, in dem Geräteprofile gespeichert sind, wobei die Geräteprofile jeweils einem Peripheriegerät eindeutig zugeordnet sind,
- ein Vergleichsmittel zum Vergleichen des Anforderungsprofils mit den Geräteprofilen und zum Ermitteln von mit dem Anforderungsprofil übereinstimmenden Geräteprofilen,
- ein Sortiermittel zum Sortieren der mit dem Vergleichsmittel ermittelten Geräteprofile, wobei die Sortierung anhand eines in dem Sortiermittel hinterlegbaren Kriteriums erfolgt,
- ein Überprüfungsmittel zum Ermitteln verfügbarer Peripheriegeräte, denen die mit dem Vergleichsmittel ermittelten Geräteprofile zugeordnet sind, wobei die Überprüfung der Verfügbarbeit in einer durch das Sortiermittel bestimmten Reihenfolge der Geräteprofile erfolgt, und
- ein Registrierungsmittel zum Registrieren des Clients für einen Zugriff für das erste von dem Überprüfungsmittel ermittelte Peripheriegerät.

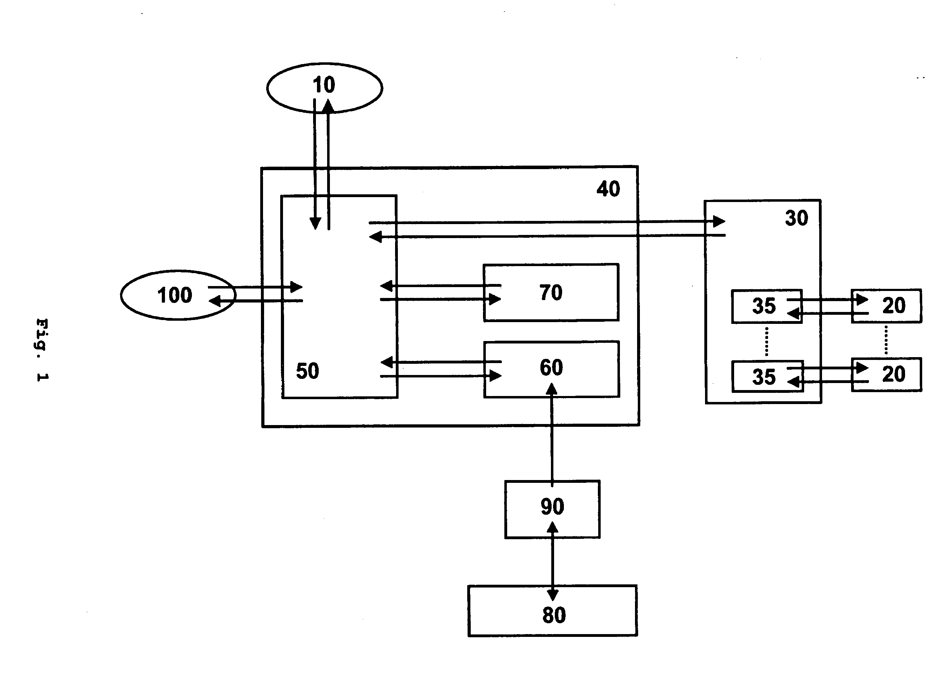

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der einzigen Figur.

Die Figur zeigt eine Ausführungsform eines Gerätehosts zum Steuern eines Zugriffs auf Peripheriegeräte einer Datenverarbeitungsanlage in einer schematischen Darstellung.

Die Erfindung eignet sich vorteilhaft für den Einsatz in einem Datenverarbeitungssystem, das in Filialen eines Dienstleistungsunternehmens zur Bearbeitung von Geschäftsvorgängen betrieben wird. In einer bevorzugten Ausgestaltung ist das bereitgestellte System zur Steuerung von Zugriffen auf Peripheriegeräte 20 dabei in eine Plattform integriert, welche eine Infrastruktur zur Bearbeitung von Geschäftsvorgängen zur Verfügung stellt und im Folgenden als CARBON (Component Architecture for Business Optimization)-Plattform bezeichnet wird.

Die CARBON-Plattform ist vorzugsweise als ein Softwareprogramm ausgebildet, das in einem oder mehreren Computern in den Filialen des Dienstleistungsunternehmens ausgeführt wird. Bei den Computern kann es sich um konventionelle Personal Computer (PC) handeln, die beispielsweise an den Verkaufs- und Beraterplätzen der Filialen von dem in den Filialen beschäftigten Personal des Unternehmens bedient werden.

Für die Bearbeitung der Geschäftsvorgänge enthält die CARBON-Plattform als Softwaremodule ausgeführte Vorgangsbearbeitungsmodule 10, die jeweils zur Durchführung eines bestimmten Geschäftsvorgangs oder eines Bestandteils eines Geschäftsvorgangs eingerichtet sind.

Beispiele für typische Geschäftsvorgänge sind die Einzahlung und die Auszahlung von Geldbeträgen von einem Konto bzw. Sparbuch oder der Verkauf von Waren bzw. Postwertzeichen. Um hier redundante Implementierungen von während der Bearbeitung eines Geschäftsvorgangs durchzuführenden Schritten zu vermeiden, wird ein Geschäftsvorgang vorzugsweise in Teilvorgänge unterteilt, die jeweils mittels eines Vorgangsbearbeitungsmoduls 10 durchgeführt werden. Die einzelnen Vorgangsbearbeitungsmodule 10, die zur Bearbeitung bestimmter Teilvorgänge ausgebildet sind, können damit zur Bearbeitung verschiedener Geschäftsvorgänge verwendet werden. Als Beispiele für derartige Teilvorgänge können der Druck von Einträgen in ein Sparbuch, die Erfassung von Kundendaten von einer Magnet- oder Chipkarte und der Druck von Postwertzeichen genannt werden.

Zur Bearbeitung von Geschäftsvorgängen wird von den Vorgangsbearbeitungsmodulen 10 insbesondere eine grafische Benutzeroberfläche (GUI) bereitgestellt, über die das Personal mittels mit den PCs verbundener Eingabemittel, wie beispielsweise Tastaturen oder Computer-Mäuse, Daten eingeben und Funktionen der Vorgangsbearbeitungsmodule 10 aufrufen kann.

Zur Erfassung und zur Ausgabe von Daten erfügt das Datenverarbeitungssystem über Peripheriegeräte 20, bei denen es sich beispielsweise um Barcodescanner zum Erfassen von Barcodes verschiedener Typen, um Magnet- und Chipkartenleser, um so genannte Pinpads und/oder weitere Geräte zur Erfassung von Authentifizierungsmerkmalen eines Kunden sowie um Laserdrucker, Bon- und Belegdrucker und Sparbuchdrucker handeln kann. In der schematischen Darstellung in der Figur wird den verschiedenen Peripheriegeräten 20 dieselbe Bezugsziffer zugeordnet, da es in der Figur nicht auf die explizite Unterscheidung der verschiedenen Peripheriegeräte 20 ankommt.

Die Peripheriegeräte 20 sind mit einem oder mehreren PCs in einer Filiale des Unternehmens verbunden. Dabei unterscheiden sich die verschiedenen Verkaufs- und Beratungsplätze in einer Filiale in der Regel in ihrer Ausstattung mit Peripheriegeräten 20. So stehen beispielsweise an Beraterplätzen alle vorgenannten Peripheriegeräte 20 zur Verfügung, während die PCs an den Verkaufsplätzen nur mit einigen der genannten Peripheriegeräte 20₁ bis 20₂ verbunden sind und über ein in der Filiale bestehendes Computernetzwerk auf weitere Peripheriegeräte 20 zugreifen können. Peripheriegeräte 20, die von mehreren Bearbeitungsplätzen bedient werden, werden dabei auch als knappe Ressourcen bezeichnet.

Zur Steuerung der Peripheriegeräte 20 verfügt die CARBON-Plattform über einen Geräte-Host, der in der dargestellten Ausführungsform der Erfindung modular aufgebaut ist.

Zur Ansteuerung der Peripheriegeräte 20 enthält der Gerätehost eine Komponente, die im Folgenden als CARBON-Host bezeichnet wird und die vorzugsweise als Softwarekomponente ausgebildet ist.

Der CARBON-Host 30 übermittelt Daten an die für die Datenausgabe vorgesehenen Peripheriegeräte 20, wie beispielsweise verschiedene Drucker, und fragt erfasste Daten sowie Statusinformationen von zur Datenerfassung vorgesehenen Peripheriegeräten 20, wie beispielsweise Barcodescannern, ab. Ferner fragt der CARBON-Host 30 Statusinformationen von den vorhandenen Peripheriegeräten 20 ab.

Vorzugsweise kommuniziert der CARBON-Host 30 dabei mit dem Betriebssystem des PCs. So werden beispielsweise Druckdaten, die von einem bestimmten Drucker auszudrucken sind, von dem CARBON-Host 30 an den entsprechenden Druckertreiber bzw. an den Drucker-Spooler des Betriebssystems übergeben. Zur Abfrage von Daten, beispielsweise von einem Barcodescanner oder Pinpad, und von Statusinformationen über Peripheriegeräte 20 kann der CARBON-Host 30 ebenfalls auf die entsprechenden Gerätetreiber des Betriebssystems zugreifen.

Für den Zugriff auf die Peripheriegeräte 20 stellt der CARBON-Host 30 so genannte Dienste 35 bereit, für die sich Clients registrieren können. Dabei wird für jedes Peripheriegerät 20 wenigstens ein Dienst zur Verfügung stellt, der die Zugriffssteuerung für dieses Gerät vornimmt. In einer bevorzugten Ausführungsform der Erfindung ist es zudem vorgesehen, dass zumindest für einen Teil der Peripheriegeräte 20 jeweils ein Dienst 35 für jede Funktion des Peripheriegerätes 20 eingerichtet ist.

Als Funktionen von Peripheriegeräten 20 können dabei insbesondere die Ausgabe von Daten, die Erfassung von Daten sowie die Bereitstellung von Statusinformationen über die entsprechenden Ausgabe- und/oder Erfassungsmittel der Peripheriegeräte 20 unterschieden werden. Dementsprechend kann der CARBON-Host 30 beispielsweise für einen Drucker mit integriertem Kartenleser über einen Dienst zur Übermittlung von Druckdaten, einen Dienst zur Abfrage erfasster Daten, einen Dienst zur Abfrage von Statusinformationen über das Drucksystem und einen weiteren Dienst zur Abfrage von Statusinformationen über den Kartenleser verfügen.

Dabei ist es vorgesehen, dass sich zu jeder Zeit nur ein Client für einen Dienst 35 des CARBON-Host 30 registrieren kann. Der registrierte Client hat damit exklusiven Zugriff auf das entsprechende Peripheriegerät 20. Damit ist sichergestellt, dass Daten an das Vorgangsbearbeitungsmodul 10 übermittelt werden, das diese Daten angefordert hat, und für den entsprechenden Dienst 30 registriert ist. Ebenso werden zuverlässig Daten von dem registrierten Vorgangsbearbeitungsmodul 10 durch ein Peripheriegerät 20 ausgegeben. Eine Fehlleitung von Daten wird damit wirkungsvoll ausgeschlossen.

Besondere Bedeutung hat der exklusive Zugriff dabei vor allem für die Ausgabe und Erfassung von geldwerten Informationen oder Daten, die bei der Durchführung von finanziellen Transaktionen ausgegeben oder erfasst werden. Durch den exklusiven Zugriff wird hier beispielsweise sichergestellt, dass ein Sparbuchdrucker von dem richtigen Vorgangsbearbeitungsmodul 10 angesprochen wird oder die von einem Pinpad zur Auszahlung von Bargeld erfasste Identifikationsnummer eines Kunden dem richtigen Vorgangbearbeitungsmodul 10 zugeleitet wird.

Zur Verwaltung der Peripheriegeräte 20 verfügt der Gerätehost der CARBON-Plattform über die mit dem CARBON-Host 30 verbundene Peripheriekomponente 40, die vorzugsweise ebenfalls als ein Softwaremodul in die CARBON-Plattform integriert ist. Die Peripheriekomponente 40 eignet sich dabei insbesondere zur Verwaltung knapper Ressourcen.

In der bevorzugten, in der einzigen Figur dargestellten Ausführungsform des Gerätehosts enthält die Peripheriekomponente 40 ein Steuerungsmodul 50, ein Geräteverwaltungsmodul 60 und ein Testmodul 70.

Die Peripheriekomponente 40 stellt dabei eine Schnittstelle zur Verfügung, über welche die Vorgangsbearbeitungsmodule 10 ein Steuerungsmodul 50 starten können. Das Steuerungsmodul 50 stellt seinerseits Operationen zur Abfrage von Geräteprofilen, zur Steuerung von Gerätetests und zur Steuerung der Dienste 35 des CARBON-Hosts 30 zur Verfügung.

Zum Starten eines Steuerungsmoduls 50 sendet ein Vorgangsbearbeitungsmodul 10 eine Zugrifssanforderung für den Zugriff auf ein Peripheriegerät 20 an die Peripheriekomponente 40. Die Zugriffsanforderung enthält dabei insbesondere ein Anforderungsprofil, das Angaben über einen Gerätetyp und/oder eine oder mehrere Eigenschaften des Periphergerätes 20 enthält und dem durch das Geräteverwaltungsmodul 60 eine oder mehrere jeweils ein Peripheriegerät 20 eindeutig kennzeichnende Geräte-IDs zugeordnet werden.

Das Geräteverwaltungsmodul 60 greift dabei auf eine vorzugsweise als XML-Dokument ausgeführte Geräteliste zu, die für jedes mit dem CARBON-Host 30 verbundene Peripheriegerät 20 ein Geräteprofil enthält, das die Geräte-ID des Peripheriegerätes 20 eine Angabe eines oder mehrerer Gerätetypen sowie gegebenenfalls eine Angabe einer oder mehrerer Eigenschaften des Peripheriegerätes 20 umfasst.

Die Geräteliste ergibt sich vorzugsweise aus einer in dem Geräteverwaltungsmodul 60 enthaltenen Gerätekonfigurationsdatei, die Geräteprofile für alle möglicherweise mit dem CARBON-Host 30 verbundenen Peripheriegeräte 20 enthält.

Die Gerätekonfigurationsdatei wird vorzugsweise durch eine zentrale Stelle des Unternehmens erstellt und enthält ein Geräteprofil für jedes von dem Unternehmen betriebene Peripheriegerät 20. Einzelne Filialen können sich dabei sowohl in ihrer Ausstattung mit Peripheriegeräten 20 eines bestimmten Gerätetyps als auch bezüglich eines Gerätemodells eines bestimmten Gerätetyps unterscheiden, so dass in der Regel nicht jedes in der Gerätekonfigurationsdatei aufgeführte Peripheriegerät 20 in allen Filialen des Unternehmens vorhanden ist.

Wird ein Peripheriegerät 20 in einer oder mehreren Filialen des Unternehmens durch ein Peripheriegerät 20 ersetzt, das nicht in der Gerätekonfigurationsdatei aufgeführt ist, oder kommt ein nicht in der Gerätekonfigurationsdatei enthaltenes Peripheriegerät 20 hinzu, so wird ein Geräteprofil für dieses Peripheriegerät 20 in die Gerätekonfigurationsdatei aufgenommen. Vorzugsweise wird dabei in der zentralen Stelle des Unternehmens eine geänderte Gerätekonfigurationsdatei erstellt, die, beispielsweise über ein Netzwerk wie das Internet, an die einzelnen PCs übertragen wird und dort die ursprüngliche Gerätekonfigurationsdatei ersetzt.

Zur Erkennung der tatsächlich mit dem PCs verbundenen Peripheriegeräte 20 ist das Geräteverwaltungsmodul 60 mit einem Abfragemodul 90 verbunden. Das Abfragemodul 90 überprüft in der Systemkonfiguration 80 des Betriebssystems des PC für jedes in der Gerätekonfigurationsdatei enthaltene Geräteprofil, ob ein Peripheriegerät 20 mit der angegebenen Geräte-ID vorhanden ist. Die Geräteprofile für die vorhandenen Peripheriegeräte werden dann von dem Geräteverwaltungsmodul 60 in die Geräteliste aufgenommen.

Die Erkennung der vorhandenen Peripheriegeräte 20 wird von dem Abfragemodul 90 bei jedem Systemstart und vorzugsweise auch während der Laufzeit in regelmäßigen, konfigurierbaren Zeitabständen durchgeführt. Durch die regelmäßigen Abfragen verfügbarer Peripheriegeräte 20 kann die Geräteliste dabei ständig aktualisiert werden, und es kann beispielsweise berücksichtigt werden, dass ein Peripheriegerät 20 etwa aufgrund eines Ausfalls entfernt wird oder dass ein neues Peripheriegerät 20 an den PC angeschlossen wird.

Die in der Gerätekonfigurationsdatei enthaltenen und gegebenenfalls in die Geräteliste übernommenen Geräteprofile enthalten eine Geräte-ID, welche das entsprechende Peripheriegerät 20 eindeutig identifiziert, sowie Angaben über einen oder mehrere Gerätetypen und/oder über Eigenschaften des Peripheriegerätes 20.

Die in dem Geräteprofil angegebenen Gerätetypen leiten sich von Gerätebasistypen ab, die Gerätegattungen, wie beispielsweise "Drucker" oder "Barcodescanner", entsprechen. Die Vorgabe der Gerätebasistypen hängt von dem Einsatzgebiet der Erfindung ab; dabei kann es beispielsweise sinnvoll sein, anstelle der Gerätebasistypen "Drucker" und "Barcodescanner" weiter gefasste Basistypen wie beispielsweise "Ausgabegerät" und "Erfassungsgerät" zu verwenden.

Anhand des Gerätetyps erfolgt eine weitere Spezifizierung eines Peripheriegerätes 20 eines bestimmten Gerätebasistyps, die sich vorzugsweise auf eine spezielle Funktion des Peripheriegerätes 20 bezieht. In dem hier betrachteten Beispiel hat es sich dabei als sinnvoll erwiesen, für Peripheriegeräte 20 des Gerätebasistyps "Drucker" die Gerätetypen "Sparbuchdrucker", "Bon- und Belegdrucker" und "Listendrucker" vorzugeben, wobei offensichtlich ist, welche Peripheriegeräte 20 diesen Gerätetypen zugeordnet sind. Auch bezüglich der Gerätetypen ist jedoch eine abweichende Vorgabe denkbar, die an den speziellen Einsatzzweck der Erfindung angepasst ist.

Oftmals eignet sich ein Peripheriegerät 20 für verschiedene Einsatzzwecke, so dass für ein derartiges Peripheriegerät 20 mehrere Gerätetypen zugeordnet werden können. So kann sich ein Listendrucker beispielsweise sowohl für den Ausdruck von Listen als auch für den Druck von Sparbucheinträgen eignen, so dass ihm die Gerätetypen "Listendrucker" und "Sparbuchdrucker" zugeordnet werden.

Darüber hinaus verfügen die Peripheriegeräte 20 über bestimmte Eigenschaften, die ebenfalls in den Geräteprofilen angegeben werden können und die Funktion des Peripheriegerätes noch näher spezifizieren. Mögliche Eigenschaften eines Druckers können beispielsweise die Art des Druckmechanismus, verarbeitungsfähige Druckmedien und deren Format, die Art des Druckmedieneinzugs oder die Auflösung des Drucks spezifizieren. Bei einem Barcodescanner betreffen mögliche Eigenschaften beispielsweise die erfassbaren Barcodetypen.

Beispielhaft wird im Folgenden ein Auszug aus einer Gerätekonfigurationsdatei bzw. einer Geräteliste für einen Drucker mit der Geräte-ID "Printer1", einen Drucker mit der Geräte-ID "Printer2" und einen Barcodescanner mit der Geräte-ID "Scanner1" angegeben:
*<Device>*
<ID> Printer1 *<*/*ID>*
*<BaseType>* Drucker *<*/*BaseType>*
<Type> Sparbuchdrucker *<*/*Type>*
*<Capability>* Magnetkartenleser *<*/*Capability>*
*<Capability>* DurchschlagDruck *<*/*Capability>*
*<Capability>* Nadeldruck *<*/*Capability>*
*<*/*Device>*
*<Device>*
*<ID>* Printer2 *<*/*ID>*
*<BaseType>* Drucker *<*/*BaseType>*
*<Type>* Listendrucker *<*/*Type>*
<Type> Sparbuchdrucker </Type>
*<Capability>* Nadeldruck *<*/*Capability>*
*<Capability>* A4 *<*/*Capability>*
*<*/*Device>*
*<Device>*
*<ID> Scanner1 <*/*ID>*
*<BaseType>* Barcodescanner *<*/*BaseType>*
<Type> Barcodescanner *<*/*Type>*
*<Capability>* EAN *<*/*Capability>*
*<Capability>* 2aus5interleaved *<*/*Capability>*
*<Capability>* Code128 *<*/*Capability>*
*<*/*Device>*

Von den beispielhaft gewählten Schlüsselwörtern bezeichnet dabei
- *Device* ein die Angaben zu einem Peripheriegerät 20 umschließendes Schlüsselwort
- *ID* eine eindeutige Kennung des Gerätemodells, wie beispielsweise die von dem Hersteller des Peripheriegerätes 20 vergebene Bezeichnung,
- *BaseType* den Gerätebasistyp, dem das Peripheriegerät 20 zugeordnet ist,
- *Type* den Gerätetyp, dem das Peripheriegerät 20 zugeordnet ist und
- *Capability* Eigenschaften des Peripheriegerätes 20.

Die Eigenschaften eines Peripheriegerätes 20 können dabei teilweise auch von den Peripheriegeräten 20 und/oder den Gerätetreibern der Peripheriegeräte 20 abgefragt werden. Dies wird oftmals durch das Betriebssystem des PCs durchgeführt, das eine Zuordnung zwischen den Geräte-IDs der an den Computer angeschlossenen Peripheriegeräte 20 und deren Eigenschaften in einer Systemkonfiguration 80 speichert. Somit müssen in die Gerätekonfigurationsdatei nur die Eigenschaften aufgenommen werden, welche nicht in der Systemkonfiguration 80 angegeben werden. Die in der Systemkonfiguration 80 enthaltenen Eigenschaften können von dieser abgefragt werden.

Vorzugsweise werden die entsprechenden Abfragen der in der Systemkonfiguration 80 gespeicherten Geräteeigenschaften ebenfalls von dem Abfragemodul 90 vorgenommen.

Peripheriegeräte 20, denen anhand ihrer Funktion mehrere Gerätetypen zugeordnet sind, werden in der Regel bevorzugt zur Durchführung einer bestimmten Funktion verwendet. Dies schlägt sich in dem Listenplatz nieder, den ein Eintrag für einen bestimmten Gerätetyp in der Auflistung der die Gerätetypen angebenden Einträge in dem Geräteprofil einnimmt. Der Gerätetyp, welcher der bevorzugten Funktion eines Peripheriegerätes 20 entspricht, steht dabei auf dem ersten Listenplatz; die auf den weiteren Listenplätzen folgenden Einträge entsprechen Funktionen, die darüber hinaus ebenfalls von dem Peripheriegerät 20 ausgeführt werden können.

So handelt es sich in dem angegebenen Beispiel bei dem Drucker mit der Geräte-ID "Printer2" in erster Linie um einen Listendrucker, der jedoch ebenfalls als Sparbuchdrucker verwendet werden kann.

Analog ergibt sich aus der Reihenfolge der die Eigenschaften angebenden Einträge eines Gerätprofils, welche Eigenschaften eines Peripheriegerätes 20 bevorzugt verwendet werden.

Anhand der in den Geräteprofilen angegebenen Gerätetypen bzw. der angegebenen Eigenschaften der Peripheriegeräte 20 ist es insbesondere möglich, die Peripheriegeräte 20, die zur Durchführung eines bestimmten Geschäftsvorgangs benötigt werden, in generischer Form anzugeben. In den Vorgangsbearbeitungsmodulen 10 enthaltene Operationen können somit unabhängig von in den Filialen konkret vorhandenen Peripheriegerätemodellen implementiert werden und verwenden lediglich eine Angabe über den Gerätetyp des benötigten Peripheriegerätes 20 für die Zugriffsanforderung.

Die Peripheriekomponente 40 stellt damit insbesondere eine Abstraktionsschicht für den Zugriff auf die Peripheriegeräte 20 dar.

Es ist damit möglich, die Vorgangsbearbeitungsmodule 10 in die Datenverarbeitungssysteme der einzelnen Filialen zu integrieren, ohne dass irgendwelche Anpassungen an die in der Filiale vorhandenen Peripheriegeräte 20 erforderlich sind. Zudem benötigt ein Entwickler eines Vorgangsbearbeitungsmoduls 10 keinerlei Kenntnisse über die speziellen, in den Filialen konkret vorhandenen Peripheriegeräte 20 und kann die Vorgangsbearbeitungsmodule 10 intuitiv anhand der generischen Bezeichnungen der Peripheriegeräte 20 erzeugen, ohne die Geräte-IDs der benötigten kennen bzw. nachschlagen zu müssen.

Darüber hinaus ermöglicht die generische Angabe von Peripheriegeräten 20 eine besonders flexible und zuverlässige Steuerung von Zugriffen auf die Peripheriegeräte 20, wie der Fachmann aus der folgenden Beschreibung der Bearbeitung von Zugriffsanforderungen durch die Peripheriekomponente 40 ersieht.

Vorzugsweise werden dabei folgende Zugriffsmöglichkeiten unterschieden, für die ein Vorgangsbearbeitungsmodul 10 Zugriffsanforderungen an die Peripheriekomponente 40 übermitteln kann:
- Zugriffe zur Ausgabe von Daten durch ein Peripheriegerät 20
- Zugriffe zur Erfassung von Daten mittels eines Peripheriegerätes 20
- Zugriffe zur Abfrage von Statusinformationen über ein Peripheriegerät 20
- Zugriffe zur Durchführung eines Gerätetests für ein Peripheriegerät 20
- Abfragen einer Liste von Geräteprofilen

Die Zugriffsanforderungen enthalten insbesondere das Anforderungsprofil mit Angaben über einen Gerätetyp, einen Gerätebasistyp und/oder eine oder mehrere Eigenschaften des benötigten Peripheriegerätes 20, wobei diese den Angaben entsprechen, die in den Geräteprofilen verwendet werden.

Bei der Übermittlung einer Zugriffsanforderung durch ein Vorgangsbearbeitungsmodul 10 an die Peripheriekomponente 40 wird ein Steuerungsmodul 50 gestartet, welches das in der Zugriffsanforderung enthaltene Anforderungsprofil zunächst an das Geräteverwaltungsmodul 60 übermittelt, welches anhand der enthaltenen Angaben eine oder mehrere Geräte-IDs "passender" Peripheriegeräte 20 ermittelt.

Falls ein Gerätebasistyp in dem Gerätprofil angegeben wird, werden dabei von dem Geräteverwaltungsmodul 60 zunächst alle in der Geräteliste enthaltenen Geräteprofile ermittelt, in denen der angegebene Gerätebasistyp angegeben ist.

Ist zusätzlich ein Gerätetyp angegeben, werden die ermittelten, eine Angabe des in dem Anforderungsprofil spezifizierten angegeben Gerätebasistyps enthaltenen Geräteprofile nach dem angegebenen Gerätetyp gefiltert. D.h. es werden alle ermittelten Geräteprofile verworfen, in denen der spezifizierte Gerätetyp nicht angegeben ist.

Da die Angaben über den Gerätetyp den Peripheriegeräten 20 jedoch aufgrund ihrer Funktion im Hinblick auf die Bearbeitung von Geschäftsvorgängen zugeordnet werden können, enthält ein von einem Vorgangsbearbeitungsmodul 10 übermitteltes Anforderungsprofil in der Regel keine Angabe des Gerätebasistyps und spezifiziert nur den Gerätetyp.

Somit beginnt die durch das Geräteverwaltungsmodul 60 vorgenommenen Auswertung des Anforderungsprofils in der Regel mit dem Vergleich der Angabe über den Gerätetyp mit den entsprechenden Angaben der in der Geräteliste enthaltenen Geräteprofile und der Ermittlung der Geräteprofile, in den dieser Gerätetyp angegeben ist.

Falls zusätzlich eine erste Eigenschaft eines benötigten Peripheriegerätes 20 in dem Anforderungsprofil angegeben ist, erfolgt eine weitere Filterung der zuvor ermittelten Geräteprofile nach der ersten Eigenschaft, wobei alle Geräteprofile verworfen werden, welche die angegebene Eigenschaft nicht enthalten.

Sind darüber hinaus weitere Eigenschaften des benötigten Peripheriegerätes 20 in dem Anforderungsprofil angegeben, erfolgt eine entsprechende weitere Filterung der Geräteprofile.

In einer bevorzugten Ausführungsform der Erfindung kann eine Zugriffsanforderung zudem ein Negativprofil mit Angaben über einen Gerätetyp und/oder Eigenschaften eines Peripheriegerätes 20 enthalten, die das benötigte Peripheriegerät 20 nicht aufweisen soll.

Das Negativprofil wird dem Geräteverwaltungsmodul 60 ebenfalls von dem Steuerungsmodul 50 übergeben, falls es in der Zugriffsanforderung enthalten ist. Das Steuerungsmodul 50 filtert dabei die anhand des Anforderungsprofils ermittelten Geräteprofile nach den in dem Negativprofil enthaltenen Angaben und verwirft die Geräteprofile, die mit diesen Angaben übereinstimmende Angaben enthalten.

Die in der vorbeschriebenen Weise ermittelten Geräteprofile übergibt das Geräteverwaltungsmodul 60 an das Steuerungsmodul 50.

Falls von dem Geräteverwaltungsmodul 60 kein mit dem Anforderungsprofil übereinstimmendes Geräteprofil ermittelt werden konnte, übermittelt das Steuerungsmodul 50 eine entsprechende Fehlermeldung an das Vorgangsbearbeitungsmodul 10, von dem die Zugriffsanforderung stammte.

Falls mehr als ein Geräteprofil ermittelt wird, wird eine Sortierung der Geräteprofile vorgenommen. Dabei werden die Geräteprofile in eine Reihenfolge gebracht, die sich aus dem Listenplatz ergibt, die der Eintrag des in dem Anforderungsprofil spezifizierten Gerätetyps bzw. der Eintrag der angegebenen Eigenschaften in den entsprechenden Listen der Geräteprofile einnimmt. Hat ein Eintrag dabei in den Listen mehrere Geräteprofile denselben Listenplatz, so wird hier die Reihenfolge der Geräteprofile beibehalten, in der diese von dem Geräteverwaltungsmodul 60 ermittelt worden sind.

Handelt es sich bei der Zugriffsanforderung um eine Abfrage von Geräteprofilen, werden die ermittelten Geräteprofile von dem Steuerungsmodul 50 an das Vorgangsbearbeitungsmodul 10 übermittelt. Dies erfolgt entweder in sortierter oder unsortierter Form.

Durch das Vorgangsbearbeitungsmodul 10 können beispielsweise die in den Geräteprofilen enthaltenen Geräte-IDs an dem Anzeigemittel des PCs dargestellt werden, so dass ein Bediener ein bestimmtes Peripheriegerät 20 für einen Zugriff auswählen kann, oder die Auswahl erfolgt durch eine entsprechende Funktion des Vorgangsbearbeitungsmoduls 10.

Nach der erfolgten Auswahl wird dann eine weitere Zugriffsanforderung an die Peripheriekomponente 40 übermittelt, die ein Anforderungsprofil enthält, in dem die Geräte-ID des ausgewählten Peripheriegerätes 20 spezifiziert ist. Eine Ermittlung von mit dem Anforderungsprofil übereinstimmenden Gerätprofilen durch das Geräteverwaltungsmodul 60 ist für eine solche Zugriffsanforderung nicht erforderlich und entfällt daher; im Übrigen wird sie jedoch durch die Peripheriekomponenten 40 so behandelt, wie jede andere Zugriffsanforderung.

Ob für den Zugriff auf ein Peripheriegerät 20 zunächst Geräteprofile abfragt werden und die Auswahl eines Peripheriegerätes 20 durch das Vorgangsbearbeitungsmodul 10 vorgenommen wird oder ob das Steuerungsmodul 50 das Peripheriegerät 20 für den Zugriff auswählt, hängt von der Art des von dem Vorgangsbearbeitungsmodul 10 durchgeführten Vorgangs ab.

So gibt es Vorgänge, wie beispielsweise der Ausdruck eines Belegs, bei denen es lediglich darauf ankommt, dass bestimmte Daten ausgegeben werden, wobei es nicht entscheidend ist, welches Ausgabegerät hierfür genutzt wird. Bei solchen Vorgängen erfolgt die Auswahl des Periphergerätes 20 durch das Steuerungsmodul 50 in der vorbeschriebenen Weise.

Bei bestimmten Vorgängen, wie beispielsweise der Erfassung von Kundendaten oder Authentifizierungsmerkmalen eines Kunden, ist es erforderlich, dass vor dem Zugriff ein bestimmtes Peripheriegerät 20 durch das Vorgangsbearbeitungsmodul 10 spezifiziert wird, damit die erfassten Daten dem entsprechenden Vorgang fehlerfrei und eindeutig zugeordnet werden können. Bei derartigen Vorgängen nimmt das Vorgangsbearbeitungsmodul 10 vorzugsweise eine Abfrage von Geräteprofilen geeigneter Peripheriegeräte 20 und eine anschließende Auswahl des zu nutzenden Peripheriegerätes 20 vor.

Um auf Dienste 35 des CARBON-Hosts 30 zuzugreifen, d.h. insbesondere Daten zur Ausgabe durch ein Peripheriegerät 20 an den CARBON-Host 30 zu übermitteln, mittels eines Peripheriegerätes 20 erfasste Daten abzufragen und einen Gerätetest durchzuführen, ist eine Registrierung für den angeforderten Dienst 35 notwendig.

Bei den Zugriffsanforderungen handelt es sich um so genannte asynchrone Anforderungen, bei denen ein Vorgangsbearbeitungsmodul 10 während der Bearbeitung der Anforderung durch die Peripheriekomponente 40 nicht blockiert ist.

Die Registrierung erfolgt dabei vorzugsweise anhand eines Ereignisbehandlers (Event-Handler), den das Vorgangsbearbeitungsmodul 10 mit der Zugriffsanforderung an das Steuerungsmodul 50 übergibt sowie anhand einer Angabe des Ereignistyps, für den eine Registrierung erfolgen soll.

Zur Abfrage mittels eines Peripheriegerätes 20 erfasster Daten sind dabei so genannte Daten-Ereignisse vorgesehen, die ausgelöst werden, wenn erfasste Daten des mit dem Ereignis verbundenen Peripheriegerätes 20 vorliegen. Bei der Auslösung des Ereignisses werden die vorliegenden Daten dabei anhand des Ereignisbehandlers an das Vorgangsbearbeitungsmodul 10 übermittelt, das für das entsprechende Ereignis registriert ist.

Zur Abfrage von Statusinformationen über ein Peripheriegerät 20 sind so genannte Status-Ereignisse vorgesehen. Diese werden dann ausgelöst, wenn Ergebnisse von Statusabfragen von dem mit dem Ereignis verbundenen Peripheriegerät 20 vorliegen, die dann anhand des entsprechenden Ereignisbehandlers an das anfordernde Vorgangsbearbeitungsmodul 10 übermittelt werden.

Auch bei Zugriffsanforderungen zur Ausgabe von Daten mittels eines Peripheriegerätes 20 und bei Zugriffsanforderungen zur Durchführung eines Gerätetests erfolgt eine Registrierung anhand eines Ereignisbehandlers.

Hier werden jedoch vorzugsweise keine Daten oder Statusinformationen von dem Steuerungsmodul erhalten und an das Vorgangsbearbeitungsmodul weitergeleitet, sondern lediglich Informationen über den Status des Dienstes selbst. Dies sind beispielsweise Informationen darüber, dass Druckdaten an einen Drucker übermittelt worden sind oder dass ein Gerätetest gestartet worden ist.

Insbesondere bei der Bearbeitung von Druckaufträgen und bei der Durchführung von Druckertests mit den Mechanismen, die von üblicherweise verwendeten Betriebssystemen bereitgestellt werden, ist eine Abfrage des Druckerstatus' nicht möglich, da oftmals lediglich der Status des Druckauftrages von dem Betriebssystem überwacht wird.

Vorzugsweise stellt die CARBON-Plattform daher einen Portmonitor zur Verfügung, über den der Status der vorhandenen Drucker durch den CARBON-Host 30 abgefragt werden kann. Die Bereitstellung von Statusinformationen über einen Drucker entspricht dabei ebenfalls einem Dienst 35 des CARBON-Host 30, auf den Vorgangsbearbeitungsmodule 10 mittels entsprechender Zugriffsanforderungen zugreifen können.

Die Registrierung für einen Dienst 35 des CARBON-Hosts 30 erfolgt dabei unter Verwendung einer Geräte-ID, die das Steuerungsmodul 50 aus den von dem Geräteverwaltungsmodul 60 ermittelten Gerätprofilen bestimmt.

Bei Diensten 35 zur Erfassung oder Ausgabe von Daten erhält ein Vorgangsbearbeitungsmodul 10 bei der Registrierung vorzugsweise einen exklusiven Zugriff auf diesen Dienst 35. D.h., dass der Dienst 35 nach der Registrierung eines Vorgangsbearbeitungsmoduls 10 für weitere Vorgangsbearbeitungsmodule 10 nicht mehr zur Verfügung steht.

In einer bevorzugten Ausführungsform der Erfindung ist es daher vorgesehen, dass das Steuerungsmodul 50 vor der Registrierung eines Vorgangsbearbeitungsmoduls 10 überprüft, ob bereits ein anderes Vorgangsbearbeitungsmodul 10 für diesen Dienst 35 registriert ist.

Ist dies der Fall, wird aus den von dem Geräteverwaltungsmodul 60 ermittelten Geräteprofilen das in der nach der Sortierung vorliegenden Reihenfolge nächste Geräteprofil und die in diesem Geräteprofil enthaltene Geräte-ID ermittelt. Für den entsprechenden mit dem dieser Geräte-ID zugeordneten Peripheriegerät 20 verbundenen Dienst 35 wird dann ebenfalls überprüft, ob bereits eine Registrierung vorliegt.

Dieses Verfahren wird fortgesetzt, bis ein Peripheriegerät 20 bzw. ein mit diesem verbundener Dienst 35 ermittelt worden ist, für den kein Vorgangsbearbeitungsmodul 10 registriert ist. Für diesen Dienst erfolgt dann eine Registrierung des Vorgangsbearbeitungsmoduls 10 durch das Steuerungsmodul 50.

Wird auf diese Weise kein verfügbares Peripheriegerät 20 bzw. kein verfügbarer Dienst 35 ermittelt, übermittelt das Steuerungsmodul eine entsprechende Fehlermeldung an das Vorgangsbearbeitungsmodul 10.

Für Dienste 35 zur Abfrage von Statusinformationen über ein Peripheriegerät 20 ist vorzugsweise eine Registrierung einer beliebigen Anzahl von Vorgangsbearbeitungsmodulen 10 möglich, da hier kein exklusiver Zugriff zur sicheren Datenübermittlung erforderlich ist.

Zur Steuerung der Dienste 35 des CARBON-Host 30 stellt das Steuerungsmodul 50 folgende Operationen bereit:
- *StartDevice* zum Starten eines Dienstes 35
- *StopDevice* zum Anhalten eines Dienstes 35
- *canStopDevice* zur Abfrage, ob eine Dienst 35 mit *StopDevice* angehalten werden kann
- *RestartDevice* zum Anhalten und anschließenden Neustarten eines Dienstes 35
- *KillDevice* zum Beenden eines Dienstes 35
- *ExecuteCommand* zum Übermitteln von Steuerbefehlen

Nach der vorbeschriebenen Registrierung einer Zugriffsanforderung eines Vorgangsbearbeitungsmoduls 10 startet das Steuerungsmodul 50 den anhand der ermittelten Geräte-ID spezifizierten Dienst 35 des CARBON-Hosts 30 mittels der Operation StartDevice.

Ist der Dienst bereits gestartet, wie es beispielsweise bei einem Dienst 35 der Fall sein kann, der Statusinformationen über ein Peripheriegerät 20 bereitstellt, so wird dabei kein Neustart durchgeführt, sondern der Dienst 35 läuft ohne Unterbrechung weiter.

Handelt es sich bei der Zugriffsanforderung um eine Anforderung zur Abfrage von mittels eines Peripheriegerätes 20 erfassten Daten, so wird mit der Operation *StartDevice* das entsprechende, anhand der Geräte-ID spezifizierte Peripheriegerät 20 initialisiert.

Sobald von dem Peripheriegerät 20 erfasste Daten, wie beispielsweise erfasste Barcodes, vorliegen, übermittelt das Steuerungsmodul 50 diese anhand des Ereignisbehandlers an das anfordernde Vorgangsbearbeitungsmodul 10. Dies geschieht dabei solange ein Vorgangsbearbeitungsmodul 10 für die entsprechenden Ereignisse bzw. Dienste 35 registriert ist.

Falls zur Bearbeitung des Vorgangs keine weiteren zu erfassenden Daten oder Statusinformationen benötigt werden, übermittelt das Vorgangsbearbeitungsmodul 10 eine Anforderung zur Deregistrierung an das Steuerungsmodul 50, die insbesondere die Geräte-ID enthält, die dem Dienst 35 zugeordnet ist, für den das Vorgangsbearbeitungsmodul 10 registriert ist.

Aufgrund dieser Anforderung wird der Ereignisbehandler gelöscht und der Dienst 35 des CARBON-Host 30 mittels der Operation *KillDevice* beendet. Damit steht der Dienst 35 bzw. das entsprechende Peripheriegerät 20 wieder für Zugriffe zur Verfügung.

Dienste 35 zur Bereitstellung von Statusinformationen über Peripheriegeräte 20 werden vorzugsweise durch den CARBON-Host 30 gestartet und stehen dauerhaft einer beliebigen Anzahl von Vorgangsbearbeitungsmodulen 10 zur Verfügung.

Registriert sich ein Vorgangsbearbeitungsmodul 10 in der vorbeschriebenen Weise für ein Status-Ereignis, wird dieses vorzugsweise zunächst durch die Operation *StartDevice* ausgelöst, d.h. es werden Statusinformationen von dem Peripheriegerät 20 abgerufen und anhand des Ereignisbehandlers an das Vorgangsbearbeitungsmodul 10 übermittelt. Nachfolgend wird das Ereignis nur dann ausgelöst, wenn Veränderungen in den Statusinformationen auftreten.

Ein Vorgangsbearbeitungsmodul 10 kann sich für einen Dienst 35 anhand einer entsprechenden Anforderung, die unter Angabe der dem Dienst 35 zugeordneten Geräte-ID und einer Kennung des Ereignisbehandlers an das Steuerungsmodul 50 übermittelt wird, deregistrieren. Dabei wird der Dienst 35 jedoch vorzugsweise nicht beendet, um anderen Vorgangsbearbeitungsmodulen 10 weiterhin Statusinformationen bereitstellen zu können, so dass die Operation *KillDevice* bei der Deregistrierung nicht durchgeführt wird.

Bei der Zugriffsanforderung für eine Ausgabe von Daten durch ein Peripheriegerät 20 werden in der Zugriffsanforderung enthaltene Druckdaten aufbereitet und über den Drucker-Spooler des Betriebssystems an den anhand der in der Zugriffsanforderung angegebenen Geräte-ID spezifizierten Drucker übergeben. Die Steuerbefehle dazu werden dabei mittels der Operation *ExecuteCommand* an das Drucksystem übermittelt, nach dem der Dienst mittels der Operation *StartDevice* von der Steuerungsmodul 50 gestartet worden ist.

Die Aufbereitung der Druckdaten für den Druck wird durch das Druckmodul 100 durchgeführt. In dem betrachteten Ausführungsbeispiel der Erfindung ist dabei der Druck von Formularen von besonderem Interesse, der beispielsweise anhand der bekannten Software "Jetform" und/oder "Crystal Reports" durchgeführt werden kann.

Für den Formulardruck werden in der Zugriffanforderung eine eindeutige Kennung des zu verwendenden Formulars sowie die Namen von Formularfeldern entsprechenden Druckvariablen und die zugehörigen zu druckenden Werte der Druckvariablen angegeben. Anhand dieser Angaben ermittelt das Druckmodul 100 ein Formular, weist den Druckvariablen des Formulars die angegebenen Werte zu und erstellt Druckdaten, die an den CARBON-Host 30 bzw. den Druckmechanismus des Betriebssystems übergeben werden.

Eine Deregistrierung für einen Dienst 35 zur Ausgabe von Daten erfolgt vorzugsweise, nachdem die Ausgabe erfolgreich von dem entsprechenden Peripheriegerät 20 beendet worden ist, so dass die korrekte Datenausgabe vor der weiteren Bearbeitung des Vorgangs sichergestellt ist.

Daher registriert sich ein Vorgangsbearbeitungsmodul 10 vorzugsweise parallel zu der Registrierung für den Dienst 35 zur Ausgabe der Daten für einen Dienst zur Abfrage von Statusinformationen für das entsprechende Peripheriegerät 20. Dies erfolgt in der bereits beschriebenen Weise.

Sobald das Vorgangsbearbeitungsmodul 10 dabei eine Information über die erfolgreiche Ausgabe der Daten erhalten hat, übermittelt es, wiederum unter Angabe der Geräte-ID und der Kennung des Ereignisbehandlers, eine Anforderung zur Deregistrierung für den die Datenausgabe betreffenden Dienst an das Steuerungsmodul 50. Bei der Deregistrierung wird dieser Dienst 35 vorzugsweise mittels der Operation *KillDevice* beendet, so dass das entsprechende Peripheriegerät 20 für weitere Zugriffe zur Verfügung steht.

Bei der Durchführung von Gerätetests, wie beispielsweise der Ausdruck einer Testseite durch einen Drucker, soll üblicherweise ein bestimmtes Peripheriegerät überprüft werden. Daher ist es vorgesehen, dass in der Zugriffsanforderung zur Durchführung eines Gerätetests die Geräte-ID und eine Testfunktion für das zu testende Peripheriegerät angegeben werden.

Durch das Steuerungsmodul 50 werden die in der Zugriffsanforderung enthaltene Geräte-ID und die spezifizierte Testfunktion an das Testmodul 70 übermittelt. Die Steuerbefehle zur Durchführung der Testfunktion sind vorzugsweise in einer so genannten Dynamic Link Library (DLL) gespeichert, auf welche das Testmodul 70 zugreift, um den Gerätetest zu steuern.

In einer besonders bevorzugten Ausführungsform der Erfindung handelt es sich bei dem Testmodul 70 um ein speziell zum Durchführen von Gerätetests ausgebildetes Vorgangsbearbeitungsmodul 10, welches durch das Steuerungsmodul 10 gestartet wird. Beim Start registriert das Steuerungsmodul 50 das Testmodul 70 für einen Dienst 35 zur Ausgabe oder zur Erfassung von Daten anhand einer Zugriffsanforderung, die ein Anforderungsprofil umfasst, in dem die Geräte-ID des zu testenden Peripheriegerätes 20 spezifiziert wird.

Um Zugriffe auf Peripheriegeräte 20 zu unterbrechen oder neu zu starten, stellt das Steuerungsmodul 50 die Operationen *StopDevice, CanStopDevice* und *RestartDevice* bereit.

Eine Unterbrechung von Diensten 35 durch die Operation *StopDevice* kann dabei beispielsweise während einer Aktualisierung oder einer anderen Anpassung der CARBON-Plattform erforderlich sein, damit Dienste 35 keine Fehler bei der Anpassung verursachen. Ob ein Dienst 35 unterbrochen werden kann, wird mittels der Operation *CanStopDevice* ermittelt.

Anhand der Operation *RestartDevice* können die unterbrochenen Dienste 35 wieder gestartet werden, wobei durch diese Operation vorzugsweise ein Neustart des Dienstes vorgenommen wird, d.h. nach der Registrierung eines Vorgangsbearbeitungsmoduls 10 bereits an ein Peripheriegerät 20 gesendete Daten erneut an das Peripheriegerät 20 übermittelt bzw. von einem Peripheriegerät 20 abgefragte Daten erneut abgefragt werden. Hierdurch wird verhindert, dass es durch das Unterbrechen eines Dienstes zu Datenverlusten kommt.

Die Operation *RestartDevice* kann ebenfalls ausgeführt werden, wenn ein Peripheriegerät 20 bzw. ein Dienst 35 einen Fehler meldet, wobei auch hier die vollständige Ausgabe bzw. Erfassung aller notwendigen Daten dadurch sichergestellt wird, dass Daten erneut vollständig an das Peripheriegerät 20 übermittelt bzw. von diesem abgefragt werden.

Die Erfindung stellt somit ein vorteilhaftes Verfahren zur Steuerung und Verwaltung von Peripheriegeräten sowie ein System zur Durchführung des Verfahrens bereit, das sich insbesondere zur Verwaltung knapper Ressourcen innerhalb eines Datenverarbeitungssystems zur Bearbeitung von Geschäftsvorgängen aller Art eignet. Die Erfindung ist jedoch keineswegs auf dieses Anwendungsgebiet beschränkt. Der Fachmann erkennt, dass eine Übertragung auf andere Anwendungsgebiete ohne Weiteres möglich ist.

### Bezugszeichenliste:

- 10: Vorgangsbearbeitungsmodul
- 20: Peripheriegerät
- 30: CARBON-Host
- 35: Dienst des CARBON-Hosts
- 40: Peripheriekomponente
- 50: Steuerungsmodul
- 60: Geräteverwaltungsmodul
- 70: Testmodul
- 80: Systemkonfiguration des Betriebssystems
- 90: Abfragemodul
- 100: Druckmodul

## Patentansprüche

1. Verfahren zum Steuern eines Zugriffs auf wenigstens ein Peripheriegerät (20) mit den folgenden Schritten:
a. Übermitteln eines Anforderungsprofils von einem Client (10) an einen Gerätehost (30, 40), wobei das Anforderungsprofil wenigstens eine Angabe eines Gerätetyps und/oder eine Angabe einer Eigenschaft eines Peripheriegerätes (20) enthält,
b. Ermitteln von mit den Anforderungsprofilen übereinstimmenden Geräteprofilen durch einen Vergleich des Anforderungsprofils mit mehreren Geräteprofilen, wobei jedes Geräteprofil einem Peripheriegerät (20) eindeutig zugeordnet ist und ein Gerätprofil eine Liste mit Gerätetypen und/oder eine Liste mit Eigenschaften des Peripheriegerätes (20) enthalten,
c. Ermitteln einer Reihenfolge der mit dem Anforderungsprofil übereinstimmenden Geräteprofile anhand einer Sortierung der mit dem Anforderungsprofil übereinstimmenden Geräteprofile nach wenigstens einem vorgebbaren Kriterium,
d. Überprüfen der Verfügbarkeit der den mit dem Anforderungsprofil übereinstimmenden Geräteprofilen zugeordneten Peripheriegeräte (20) in der ermittelten Reihenfolge,
e. Registrieren des Clients (10) für einen Zugriff auf das erste Peripheriegerät (20), für das die Verfügbarkeit bei der Überprüfung festgestellt wird, wobei
die Sortierung der Geräteprofile anhand von Listenplätzen der in dem Anforderungsprofil enthaltenen Angabe des Gerätetyps innerhalb der in den ermittelten Geräteprofilen enthaltenen Listen und/oder anhand von Listenplätzen der in dem Anforderungsprofil enthaltenen Angabe der Eigenschaft des Peripheriegerätes (20) innerhalb der in den ermittelten Geräteprofilen enthaltenen Listen erfolgt.

2. Verfahren nach Anspruch 1,
**dadurch gekennzeichnet,**
**dass** die Verfügbarkeit eines Peripheriegerätes (20) nicht festgestellt wird, wenn ein Client für dieses Peripheriegerät (20) registriert ist.

3. Verfahren nach einem der vorangegangenen Ansprüche,
**dadurch gekennzeichnet,**
**dass** die Geräteprofile in einer Gerätekonfigurationsdatei enthalten sind, welche jeweils ein Geräteprofil für jedes möglicherweise mit dem Gerätehost (30, 40) verbundene Peripheriegerät (20) enthält.

4. Verfahren nach einem der vorangegangenen Ansprüche,
**dadurch gekennzeichnet,**
**dass** die Geräteprofile in einer Geräteliste enthalten sind, welche jeweils ein Geräteprofil für jedes mit dem Gerätehost (30, 40) verbundene Peripheriegerät (20) enthält.

5. Verfahren nach den Ansprüchen 3 und 4,
**dadurch gekennzeichnet,**
**dass** für die Geräteprofile in der Gerätekonfigurationsdatei überprüft wird, ob die den Geräteprofilen zugeordneten Peripheriegeräte (20) mit dem Gerätehost (30, 40) verbunden sind, und die Geräteprofile, bei den die Überprüfung ergibt, dass das zugeordnete Peripheriegerät (20) mit dem Gerätehost (30, 40) verbunden ist, in der Geräteliste gespeichert werden.

6. Verfahren nach Anspruch 5,
**dadurch gekennzeichnet,**
**dass** die Überprüfung in regelmäßigen Zeitabständen durchgeführt wird.

7. Verfahren nach einem der vorangegangenen Ansprüche,
**dadurch gekennzeichnet,**
**dass** der Client ein Negativprofil an den Gerätehost (30, 40) übermittelt, und bei der Ermittlung von mit dem Anforderungsprofil übereinstimmenden Geräteprofilen solche Geräteprofile nicht berücksichtigt werden, die mit dem Negativprofil übereinstimmen.

8. Computerlesbares Medium enthaltend Anweisungen zur Durchführung eines Verfahrens nach einem der vorangegangenen Ansprüche auf einem Computer.

## Claims

1. A method for controlling access to at least one peripheral device (20) with the following steps:
a. transmitting a request profile from a client (10) to a device host (30, 40), whereby the request profile comprises at least one piece of information about a device type and/or one piece of information about a property of a peripheral device (20),
b. determining device profiles that correspond to the request profiles by comparing the request profile to several device profiles, whereby each device profile is unambiguously associated with a peripheral device (20) and a device profile contains a list of device types and/or a list of properties of the peripheral device (20),
c. determining a sequence of the device profiles that correspond to the request profile on the basis of a sorting of the device profiles that correspond to the request profiles according to at least one predefinable criterion,
d. checking the availability of the peripheral devices (20) associated with the device profiles that correspond to the request profile in the determined sequence,
e. registering the client (10) for access to the first peripheral device (20) for which availability was determined during the checking procedure,
**whereby**
the device profiles are sorted on the basis of list placements of the information about the device type contained in the request profile within the lists contained in the determined device profiles and/or on the basis of list placements of the information about the property of the peripheral device (20) contained in the request profile within the lists contained in the determined device profiles.

2. The method according to Claim 1,
**characterized in that**
the availability of a peripheral device (20) is not determined if a client is registered for this peripheral device (20).

3. The method according to one of the preceding claims,
**characterized in that**
the device profiles are contained in a device configuration file that, in each case, contains a device profile for each peripheral device (20) that is conceivably connected to the device host (30, 40).

4. The method according to one of the preceding claims,
**characterized in that**
the device profiles are contained in a device list that, in each case, contains a device profile for each peripheral device (20) that is connected to the device host (30, 40).

5. The method according to Claims 3 and 4,
**characterized in that,**
for the device profiles in the device configuration file, it is checked whether the peripheral devices (20) associated with the device profiles are connected to the device host (30, 40), and the device profiles for which the checking procedure indicates that the associated peripheral device (20) is connected to the device host (30, 40) are stored in the device list.

6. The method according to Claim 5,
**characterized in that**
the checking procedure is carried out at regular intervals.

7. The method according to one of the preceding claims,
**characterized in that**
the client transmits a negative profile to the device host (30, 40), and, when device profiles are determined that correspond to the request profile, those device profiles that correspond to the negative profile are not taken into consideration.

8. A computer-readable medium containing instructions for carrying out a method according to one of the preceding claims on a computer.

## Revendications

1. Procédé de contrôle d'un accès à au moins un appareil périphérique (20), comportant les étapes suivantes :
a. transmission d'un profil d'exigences d'un client (10) à un hôte d'appareils (30, 40), le profil d'exigences contenant au moins une indication d'un type d'appareil et/ou une indication d'une caractéristique d'un appareil périphérique (20) ;
b. détermination de profils d'appareils coïncidant avec les profils d'exigences par une comparaison du profil d'exigences avec plusieurs profils d'appareils, chaque profil d'appareil étant associé univoquement à un appareil périphérique (20) et un profil d'appareil contenant une liste de types d'appareils et/ou une liste de caractéristiques de l'appareil périphérique (20) ;
c. détermination d'un ordre des profils d'appareils coïncidant avec le profil d'exigences à l'aide d'un classement des profils d'appareils coïncidant avec le profil d'exigences selon au moins un critère prédéterminable ;
d. vérification de la disponibilité des appareils périphériques (20) associés aux profils d'appareils coïncidant avec le profil d'exigences dans l'ordre déterminé ;
e. enregistrement du client (10) pour un accès au premier appareil périphérique (20) pour lequel la disponibilité est constatée lors de la vérification ;
le classement des profils d'appareils étant effectué à l'aide de places de listes de l'indication du type d'appareil contenue dans le profil d'exigences dans les listes contenues dans les profils d'appareils déterminés et/ou à l'aide de places de listes de l'indication de la caractéristique de l'appareil périphérique (20) contenue dans le profil d'exigences dans les listes contenues dans les profils d'appareils déterminés.

2. Procédé selon la revendication 1, **caractérisé en ce que** la disponibilité d'un appareil périphérique (20) n'est pas constatée lorsqu'un client est enregistré pour cet appareil périphérique (20).

3. Procédé selon l'une des revendications précédentes, **caractérisé en ce que** les profils d'appareils sont contenus dans un fichier de configuration d'appareils qui contient respectivement un profil d'appareil pour chaque appareil périphérique (20) possiblement relié à l'hôte d'appareils (30, 40).

4. Procédé selon l'une des revendications précédentes, **caractérisé en ce que** les profils d'appareils sont contenus dans une liste d'appareils qui contient respectivement un profil d'appareil pour chaque appareil périphérique (20) relié à l'hôte d' appareils (30, 40).

5. Procédé selon les revendications 3 et 4, **caractérisé en ce qu'**il est vérifié, pour les profils d'appareils du fichier de configuration d'appareils, si les appareils périphériques (20) associés aux profils d'appareils sont reliés à l'hôte d'appareils (30, 40), et les profils d'appareils pour lesquels la vérification établit que l'appareil périphérique associé (20) est relié à l'hôte d'appareils (30, 40) sont stockés dans la liste d'appareils.

6. Procédé selon la revendication 5, **caractérisé en ce que** la vérification est effectuée à intervalles de temps réguliers.

7. Procédé selon l'une des revendications précédentes, **caractérisé en ce que** le client transmet un profil négatif à l'hôte d'appareils (30, 40) et, lors de la détermination de profils d'appareils coïncidant avec le profil d'exigences, les profils d'appareils qui coïncident avec le profil négatif ne sont pas pris en compte.

8. Support lisible par ordinateur, contenant des instructions permettant d'exécuter sur un ordinateur un procédé selon l'une des revendications précédentes.
